# EUROPÄISCHE PATENTANMELDUNG

(11) **EP 0 703 258 A2**
(43) Veröffentlichungstag der Anmeldung: **27.03.1996**
(21) Anmeldenummer: 95114628.1
(22) Anmeldetag: 18.09.1995
(51) Int. Cl.: C08G 59/12, C09D 163/00, C09D 5/03

(54) **Härtbare, pulverförmige Mischungen**

(30) Priorität: 26.09.1994 DE 4434279
(71) Anmelder: HOECHST AKTIENGESELLSCHAFT, D-65926 Frankfurt am Main (DE)
(72) Erfinder: Marten, Manfred, D-55126 Mainz (DE); Fink, Dietmar, D-65232 Taunusstein (DE)

(57) **Zusammenfassung**

Härtbare, pulverförmige Mischungen enthaltend
A) Verbindungen, die mindestens zwei 1,2-Epoxidgruppen enthalten, die Umsetzungsprodukte sind aus
   A1) Verbindungen mit mindestens zwei 1,2-Epoxidgruppen pro Molekül und
   A2) cyclischen Carbonsäureanhydriden,
B) Härtungsmittel und
C) gegebenenfalls weitere Zusätze.

## Beschreibung

Pulverlacke werden u. a. zum Beschichten von Metallmöbeln, wie Campingartikeln, Kühlschränken, Gartenmöbeln, Regalen sowie zum Lackieren von Kleingegenständen und kompliziert geformten Werkstücken, von Fahrrädern, Nähmaschinen und anderen Metallgegenständen verwendet. Größtenteils werden dabei metallische Gegenstände lackiert, aber auch beispielsweise Kunststoffe sind mit der Pulverlacktechnologie lackierbar.

Gegenüber anderen Lackierverfahren hat die Pulverlacktechnologie eine Reihe von Vorteilen. So arbeitet dieses Lackierverfahren lösungsmittelfrei und damit umweltfreundlich und kostengünstiger. Auch hinsichtlich der Entsorgung, Arbeitssicherheit (Abwesenheit brennbarer Lösungsmittel), Arbeitshygiene und des Umweltschutzes ist das Verfahren vorteilhaft. Darüber hinaus entfallen die Antrocknungszeiten der Lackschichten. Der lackierte Gegenstand wird direkt zum Einbrennofen befördert, wodurch der Zeitaufwand für den gesamten Lackiervorgang reduziert wird.

Neben der Herstellung von Überzügen können Pulverharze auch als Klebstoffe eingesetzt werden. Dies ist dann vorteilhaft, wenn zum Beispiel unporöse Werkstoffe wie Metalle verklebt werden müssen, aus denen flüchtige Bestandteile nicht mehr entweichen können.

Aber auch bei der Verarbeitung von porösen Werkstoffen werden in zunehmendem Maße Klebstoffsysteme bevorzugt, die lösungsmittelfrei sind und keine Spaltprodukte abgeben. Diese Voraussetzungen werden von Klebstoffen auf Epoxidharzbasis erfüllt.

Unter den wärmehärtbaren Pulverlacksystemen werden überwiegend Epoxidharzkombinationen eingesetzt. Diese Epoxidharze werden mit Härtern z.B. mit Aminen, Polyamiden, Säureanhydriden, Bortrifluoridkomplexen oder Dicyandiamid gemischt. Viele dieser Mischungen haben Nachteile, die ihre technische Verwendung einschränken. Aufgrund von Umweltaspekten sowie aus wirtschaftlichen Überlegungen werden heute lösungsmittel- und spaltproduktfreie Beschichtungs- und Klebstoffe benötigt, die extrem schnell verarbeitet werden können.

In der Praxis hat sich nun gezeigt, daß für viele Anwendungszwecke die Härtungszeit der Pulvermischungen nach dem Stand der Technik zu lange ist, da die bekannten Pulvermischungen und Verfahren keine ausreichend hohe Reaktivität aufweisen. Die Pulverlackmischung soll also bei möglichst niedriger Temperatur in kürzester Zeit aushärten. Darüberhinaus wird außerdem eine gute Lagerstabilität verlangt.

Die Härtung von Epoxidharzen, insbesondere der Glycidyläther, mit vielen Anhydriden, Di- und Polyanhydriden und verschiedenen Verbindungen in Kombination mit Anhydriden ist bekannt (vgl. Lee, Neville, Handbook of Epoxy Resins, Mc Graw-Hill Book Company, Chapter 12 Acid-Anhydride Curing Agents for Epoxy-Resins).

Bereits in der bekanntgemachten deutschen Patentanmeldung D 7193 (04.09.1952) werden harzartige Kondensationsprodukte beschrieben aus Verbindungen, die Äthylenoxy- oder Propylenoxygruppen im Molekül enthalten, und Polyanhydriden. Nach der bekanntgemachten deutschen Patentanmeldung H 9989 (10.09.1953) lassen sich Kunstharze erhalten durch Erhitzen von Polyepoxyverbindungen, die wenigstens zwei Glycidyläthergruppen enthalten und sich von nicht phenolischen Hydroxylgruppen ableiten, mit Anhydriden mehrbasiger Carbonsäuren. Aus der Vielzahl der Patente seien weiterhin beispielsweise erwähnt die GB-A 744,388, in der Mischungen aus Epoxidharzen und Hexachlorendomethylentetrahydrophthalsäureanhydridund deren Aushärtung offenbart werden, und die GB-A 1,264,647, aus der bekannt ist, Epoxidharze mit mindestens einen carbocyclischen Ring enthaltenden Polycarbonsäureanhydriden in Gegenwart von carbocyclischen und/oder heterocyclische Ringe enthaltenden sauren Polyestern auszuhärten.

Nach der Patentschrift SU 328134 werden Epoxid-Blockcopolymere durch Kondensation von carboxylhaltigen Verbindungen mit einem Epoxidüberschuß hergestellt. Dabei werden als Säurekomponente lineare Polyanhydride von Dicarbonsäuren oder sauren Polyestern eingesetzt.

Es wurde nun überraschenderweise gefunden, daß durch die Verwendung von speziellen Epoxidverbindungen Pulvermischungen hergestellt werden können, die lagerstabil sind und die eine deutlich höhere Reaktivität aufweisen als die nach dem Stand der Technik bekannten Pulverharzsysteme.

Die vorliegende Erfindung betrifft härtbare, pulverförmige Mischungen enthaltend
A) Verbindungen, die mindestens zwei 1,2-Epoxidgruppen enthalten, die Umsetzungsprodukte sind aus
   A1) Verbindungen mit mindestens zwei 1,2-Epoxidgruppen pro Molekül und
   A2) cyclischen Carbonsäureanhydriden,
B) Härtungsmittel und
C) gegebenenfalls weitere Zusätze.

Die erfindungsgemäß eingesetzten Epoxidverbindungen A) enthalten im Durchschnitt mindestens 2 Epoxidgruppen pro Molekül. Das Epoxidäquivalentgewicht (Molmasse dividiert durch die Anzahl der Epoxidgruppen im Molekül) liegt im allgemeinen zwischen 300 und 1 500 g/mol, vorzugsweise zwischen 400 und 800 g/mol und insbesondere zwischen 500 und 700 g/mol, während die Säurezahl zumeist 0,01 bis 20, vorzugsweise 0,01 bis 2 mg KOH/g beträgt. Weiterhin besitzen die Epoxide A) zahlenmittlere Molmassen Mₙ von 500 bis 10 000 g/mol, vorzugsweise von 800 bis 3 000 g/mol. Je nach Ausgangskomponenten A1) und A2) und deren Molverhältnis sowie der Molmasse von A) handelt es sich bei diesen Epoxidverbindungen um feste Produkte mit Glastemperaturen (Tg) von mindestens 20 °C, vorzugsweise von mindestens 35 bis 60 °C.

Die Herstellung der Epoxidverbindungen A) erfolgt durch Umsetzung der Verbindungen A1) mit den cyclischen Carbonsäureanhydriden A2) durch mehrstündiges Erhitzen der Komponenten unter Ausschluß von Sauerstoff auf Temperaturen von 100 bis 200 °C, vorzugsweise 120 bis 160 °C bis zum Erreichen einer Säurezahl von kleiner als 20 mg KOH/g, vorzugsweise kleiner als 2 mg KOH/g. Dabei können sowohl Epoxidharze eingesetzt werden, die in einem Einstufenprozeß (z.B. aus Bisphenol und Epichlorhydrin) hergestellt wurden als auch in einem Zweistufenverfahren (z.B. aus einem niedermolekularen flüssigen Epoxidharz und Bisphenol) erhältlich sind. Die Herstellung der Epoxidverbindungen A) erfolgt bevorzugt in der Weise, daß der Synthese des Epoxidharzes A1) sofort die Umsetzung mit dem cyclischen Anhydrid A2) angeschlossen wird.

Die erfindungsgemäß als Komponente A1) eingesetzten 1,2-Epoxidverbindungen haben im Mittel mindestens zwei 1,2-Epoxidgruppen pro Molekül, ein Epoxid-Äquivalentgewicht von 160 bis 1000, vorzugsweise 160 bis 600 g/mol, und eine Glastemperatur von mindestens 10 °C. Sie können sowohl gesättigt als auch ungesättigt sowie aliphatisch, cycloaliphatisch, aromatisch und heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen oder ähnliche.

Derartige Polyepoxidverbindungen A1) sind z.B. solche auf Basis mehrwertiger Phenole, beispielsweise aus Resorcin, Hydrochinon, aus 4,4'-Dihydroxydiphenylmethan, aus Isomerengemischen des Dihydroxydiphenylmethans (Bisphenol F), aus 4,4'-Dihydroxy-3,3'-dimethyldiphenylmethan, aus 2,2-Bis(4-hydroxyphenyl)propan (Bisphenol A), aus 4,4'-Dihydroxydiphenylcyclohexan, aus 2,2-Bis(3-methyl-4-hydroxyphenyl)propan, aus 4,4'-Dihydroxydiphenyl,aus 4,4'-Dihydroxydiphenylsulfon,aus Tris-(4-hydroxyphenyl)-methan, aus 4,4'-Dihydroxybenzophenon, 1,1-Bis-(4-hydroxyphenyl)-isobutan,2,2-Bis-(4-hydroxy-3-tert.-butylphenyl)-propan,Bis-(2-hydroxynaphthyl)-methan, 1,5-Dihydroxynaphthalin, Bis-(4-hydroxyphenyl)-äther; ferner aus den Hydrierungs-, Chlorierungs- und Bromierungsprodukten der vorstehend genannten Verbindungen und aus Novolaken (d.h. aus Umsetzungsprodukten von ein- oder mehrwertigen Phenolen mit Aldehyden, insbesondere Formaldehyd in Gegenwart saurer Katalysatoren).

Auch die Polyglycidyläther von mehrwertigen Alkoholen sind als A1) geeignet. Als Beispiele derartiger mehrwertiger Alkohole seien Trimethylolpropan und 2,2-Bis-(4-hydroxycyclohexyl)-propan genannt.

Geeignet sind auch mit der Komponente A1) verträgliche feste Acrylatharze, die Glycidylgruppen enthalten, z.B. geeignete Polymere auf Basis von Glycidylmethacrylat.

Weiter kommen als A1) Verbindungen wie (Poly)glycidylester der Formel (I) 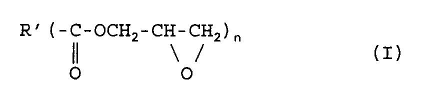
in Frage, in denen R' ein linearer oder verzweigter, gesättigter oder ungesättigter Kohlenwasserstoffrest mit bis zu 40, vorzugsweise bis zu 10 Kohlenstoffatomen oder ein gegebenenfalls substituierter Phenylrest ist und n mindestens 2, vorzugsweise 2 bis 5 bedeutet. Solche Polyglycidylester von Polycarbonsäuren erhält man durch die Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Terephthalsäure, Hexahydrophthalsäure, 2,6-Naphthalindicarbonsäure und dimerisierte Fettsäuren. Beispiele für diese Ester sind Terephthalsäurediglycidylester und Hexahydrophthalsäurediglycidylester.

Ferner sind als Polyepoxide A1) auch Verbindungen wie Triglycidylisocyanurat und dessen Oligomere und Triglycidylurazol sowie dessen Oligomere und entsprechende Mischungen geeignet.

Diese Polyepoxidverbindungen können auch in Mischung untereinander sowie gegebenenfalls auch in Mischung mit Monoepoxiden eingesetzt werden, wobei zu beachten ist, daß die Mischung der 1,2-Epoxidverbindungen eine Glastemperatur von mindestens 10 °C besitzt. Verwendet man in der Mischung 1,2-Epoxidverbindungen mit niedrigeren Glastemperaturen, so können diese nur zu einem geringen Anteil und nur in Kombination mit entsprechend hochschmelzenden 1,2-Epoxidverbindungen eingesetzt werden, damit die Glastemperatur der Komponente A) mindestens 10 °C beträgt.

Als Monoepoxide sind beispielsweise geeignet: Epoxidierte einfach-ungesättigte Kohlenwasserstoffe (Butylen-, Cyclohexen-, Styroloxid), halogenhaltige Epoxide, wie z.B. Epichlorhydrin; Epoxidäther einwertiger Alkohole (Methyl-, Äthyl-, Butyl-, 2-Äthylhexyl-, Dodecylalkohol); Epoxidäther einwertiger Phenole (Phenol, Kresol sowie andere in o- oder p-Stellung substituierte Phenole); Glycidylester ungesättigter Carbonsäuren, epoxidierte Ester von ungesättigten Alkoholen bzw. ungesättigten Carbonsäuren sowie die Acetale des Glycidaldehyds.

Weitere Epoxidverbindungen mit geeigneten Aufschmelzpunkten sind in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Chapter 2 und in Wagner/Sarx, "Lackkunstharze", Carl Hanser Verlag (1971), S. 174 ff. beschrieben.

Bevorzugte Epoxidverbindungen A1) sind:
- Poly-(Epoxyalkyl)-Äther aliphatischer oder cycloaliphatischer Polyhydroxyverbindungen, wie des Trimethyloläthans, Trimethylolpropans, Tris(hydroxyäthyl)-isocyanurats und Pentaerythrits;
- Umsetzungsprodukte von Epihalogenhydrinen, wie Epichlorhydrin mit monomeren mehrwertigen Phenolen wie 2,2-Bis(4-hydroxyphenyl)propan, 1,1-Bis(4-hydroxyphenyl)-äthan, Bis(4-hydroxyphenyl)-methan, 4,4'-Dihydroxydiphenylsulfon,Hydrochinon,Resorcin,Dihydroxydiphenyl, Dihydroxynaphthalin; ferner das Trisglycidylisocyanurat;
- Glycidyläther von mehrwertigen phenolischen Verbindungen wie Novolaken und Resolen, gewonnen aus der Kondensation des Phenols und/oder der Kresole mit Formaldehyd;
- Polyglycidylester von Polycarbonsäuren wie Diglycidylester der Phthalsäure, Isophthalsäure, Terephthalsäure, Tetrahydrophthalsäure, Hexahydrophthalsäure, aus Polyestern abgeleitete Polyglycidylester oder auch Verbindungen mit freien Carbonsäuregruppen.

Besonders bevorzugt werden als A1) Epoxidharze auf Basis von Bisphenol A und/oder Bisphenol F mit Epichlorhydrin mit Epoxidäquivalentgewichten im Bereich von 160 bis 1000 g/mol verwendet.

Als cyclische Carbonsäureanhydride A2) kommen zweckmäßigerweise solche in Frage, die 4 bis 20, vorzugsweise 4 bis 10 C-Atome aufweisen, und die gegebenenfalls noch Substituenten, wie Halogen, insbesondere Chlor, sowie Carboxylgruppen tragen können. Sie können sich von (cyclo)-aliphatischen, olefinisch ungesättigten oder aromatischen Polycarbonsäuren mit 2 oder mehreren Carboxylgruppen ableiten. Beispielsweise seien hier genannt: Bernsteinsäureanhydrid, Alkenylbernsteinsäureanhydride wie z.B. Dodecenylbernsteinsäureanhydrid, Glutarsäureanhydrid, Maleinsäureanhydrid, Citraconsäureanhydrid (Methylmaleinsäureanhydrid), Dichlormaleinsäureanhydrid, Aconitsäureanhydrid (1-Propen-1,2,3-tricarbonsäure-1,2-anhydrid), Tricarballylsäureanhydrid (Propan-1,2,3-tricarbonsäureanhydrid), Itaconsäureanhydrid (Methylenbernsteinsäureanhydrid), Cyclopentantetracarbonsäuredianhydrid, Δ⁴-Tetrahydrophthalsäureanhydrid, 4-Methyl-Δ⁴-tetrahydrophthalsäureanhydrid, Hexahydrophthalsäureanhydrid, 4-Methylhexahydrophthalsäureanhydrid, 3,6-Endomethylen-Δ⁴-tetrahydrophthalsäureanhydrid (=Nadicanhydrid), 4-Methyl-3,6-endomethylen-Δ⁴-tetrahydrophthalsäureanhydrid (=Methylnadicanhydrid); 3,4,5,6,7,7-Hexachlor-3,6-endomethylentetrahydrophthalsäureanhydrid (=Chlorendicsäureanhydrid), das Diels-Alder-Addukt aus 2 Mol Maleinsäureanhydrid und 1 Mol 1,4-Bis-(cyclopentadienyl)-2-buten oder Diels-Alder-Addukte aus Maleinsäureanhydrid und konjugiert ungesättigten Fettsäuren, wie 2,4-Hexadiensäure (Sorbinsäure), 9,11-Octadecadiensäure (Ricinensäure), 9,11,13-Octadecatriensäure (Eleostearinsäure), 9,11,13,14-Octadecatetraensäure, ferner aromatische Polycarbonsäureanhydride, wie Phthalsäureanhydrid, Trimellithsäureanhydrid, Pyromellithsäureanhydrid oder Benzophenontetracarbonsäurebisanhydrid. Man kann aber auch andere, cyclische Anhydride von Polycarbonsäuren verwenden, deren Carboxylgruppen sich an verschiedenen gegebenenfalls anellierten Ringen befinden, wie beispielsweise 1,8-Naphthalindicarbonsäureanhydrid.

Besonders bevorzugt sind Bernsteinsäureanhydrid, Phthalsäureanhydrid und die durch Diels-Alder-Addition aus billigen petrochemischen Rohstoffen zugänglichen cycloaliphatischen Dicarbonsäureanhydride, wie z.B. Δ⁴-Tetrahydrophthalsäureanhydrid oder Hexahydrophthalsäureanhydrid.

Die Komponenten A1) und A2) werden üblicherweise in solchen Mengen eingesetzt, daß pro Mol Epoxidverbindung A1) im allgemeinen 0,01 - 1 Mol, vorzugsweise 0,05 - 0,5 Mol und besonders bevorzugt 0,1 bis 0,4 mol cyclisches Anhydrid A2), verwendet wird.

Für die gezielte und beschleunigte Umsetzung der Anhydrid- und Carboxylgruppen der Komponente A2) und der Epoxidgruppen der Komponente A1) können als Katalysatoren beispielsweise eingesetzt werden: Brönsted-Basen wie Natriumhydroxid, Kaliumhydroxid, Lithiumhydroxid, Natriumcarbonat; Chromverbindungen wie CrCl₃, CrO₃, Chromacetylacetonat; Imidazole; quaternäre Ammonium- und Phosphoniumverbindungen wie Benzyltrimethylammoniumchlorid, Tetraäthylammoniumchlorid, Tetramethylammoniumchlorid, Benzyltrimethylammoniumchlorid, Benzyldodecyldimethylammoniumchlorid, Methyltriphenylphosphoniumjodid,Triphenyl-(2,5-dihydroxyphenyl)-phosphoniumhydroxid, Äthyltriphenylphosphoniumacetat, Triphenyläthylphosphoniumbromid sowie Lewis-Basen, wie organ. Phosphane (z.B. Triphenylphosphan, Tricyclohexylphosphan, Tributylphosphan, Cyclohexyloctylphosphan) und Amine, die aromatisch (N,N-Dimethylanilin, N,N-Diäthylanilin, N,N-Dimethyl-p-toluidin, N,N-Diäthyl-p-toluidin) und (cyclo)aliphatisch (Triäthylamin, Tributylamin, Benzyldimethylamin, Benzyldiäthylamin, Triäthylendiamin, N-Methylmorpholin, N-Methyl-piperidin, N-Butylamin) sein können, ebenso Alkanolamine wie Diäthanolamin, Dimethyläthanolamin, Diäthyläthanolamin, Dibutyläthanolamin, Methyldiäthanolamin und Di(3-phenoxy-2-hydroxy-propyl)-alkylamine, wie z.B. Di-(3-phenoxy-2-hydroxy-propyl)-n-butylamin. Bevorzugt sind hierbei Verbindungen der Formel (II) 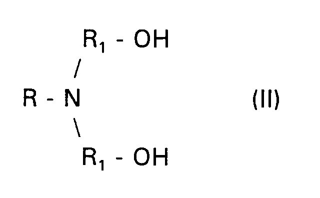
in der bedeuten
- R: = Wasserstoff oder einen unverzweigten oder verzweigten Alkylrest mit 1 bis 18, vorzugsweise 1 bis 4 C-Atomen; cycloaliphatischer Alkylrest mit 5 bis 12, vorzugsweise 5 bis 8 C-Atomen oder -R₁OH;
- R₁: = einen unverzweigten oder verzweigten Alkylenrest mit 2 bis 6, vorzugsweise 2 oder 3 C-Atomen, der zusätzlich Substituenten -OR₂ tragen kann,
- R₂: = einen unverzweigten oder verzweigten Alkylenrest mit 2 bis 6, vorzugsweise 2 oder 3 C-Atomen oder einen substituierten oder unsubstituierten aromatischen Ring.

Besonders bevorzugte Verbindungen gemäß Formel (II) sind Triisopropanolamin und/oder Triäthanolamin.

Diese Katalysatoren werden im allgemeinen in Mengen von 0,01 bis 1 %, vorzugsweise 0,05 bis 2 %, bezogen auf die Summe der Massen von A1) und A2), eingesetzt.

Die Reaktionsprodukte aus A1) und A2) können auch in Abmischung mit den bekannten Epoxidharzen, z. B. auf Basis von Bisphenol-A oder Bisphenol-F verwendet werden, wobei deren Anteil bevorzugt zwischen 5 und 70 % an der Gesamtmasse der Epoxidkomponenten A betragen darf.

Als Härtungsmittel B) kommen ganz allgemein alle zu diesem Zweck bekannten Verbindungen in Frage, insbesondere Anhydrid-Härter wie zum Beispiel Phthalsäureanhydrid,Tetrahydrophthalsäureanhydrid,4-Methyl-tetrahydrophthalsäureanhydrid, Hexahydrophthalsäureanhydrid, 4-Methylhexahydrophthalsäureanhydrid, Methylnadicanhydrid (Trivialname für Isomere des Methylendomethylentetrahydrophthalsäureanhydrids), Chlorendic (HET)-anhydrid (3,4,5,6,7,7-Hexachlor-3,6-endomethylentetrahydrophthalsäureanhydrid), Pyromellithsäuredianhydrid,Benzophenontetracarbonsäuredianhydrid,Trimellithsäureanhydrid, Härter entsprechend der Komponente B) aus DE-A 25 56 182, Dodecenylbernsteinsäureanhydrid, Isooctenylbernsteinsäureanhydrid, andere saure Härter, Dicyandiamid, phenolische Härtungsmittel wie z.B. die Dow-Härter ®D.E.H. 80, ®D.E.H. 82, ®D.E.H. 84, Carbonsäuresalze von Imidazol- oder Imidazolinverbindungen, schmelzbare, lösliche Addukte, die durch Umsetzung einer Epoxidverbindung mit Imidazol- oder Imidazolinverbindungen oder deren Carbonsäuresalzen erhalten werden (vgl. DE-C 19 10 758).

Bevorzugt als Härtungsmittel B) sind Carboxylgruppen enthaltende Polyester. Die Epoxidverbindungen A) und die Carboxylpolyester als Härtungsmittel B) liegen in der erfindungsgemäßen Mischung im allgemeinen in solchen Mengen vor, daß das Äquivalentverhältnis von Carboxylgruppen des Härtungsmittels zu Epoxid- und Hydroxylgruppen in A) 0,7 bis 1,3, vorzugsweise 0,9 bis 1,1 beträgt. Zumeist wird hierfür die Menge an Härtungsmittel B) im Fall von Carboxyl-Polyester bei 50 bis 90 %, vorzugsweise bei 65 bis 85 %, bezogen auf die Summe der Massen von A) und B) liegen. Auf diese Weise wird in der Regel eine ausreichende Vernetzungsdichte erhalten.

Die als Komponente B) eingesetzten Carboxylgruppen-haltigen Polyester besitzen zumeist eine Säurezahl von 15 bis 150, vorzugsweise 30 bis 100 mg KOH/g und eine Glasübergangstemperatur von mindestens 35 °C, vorzugsweise mindestens 40 bis 60 °C. Die zahlenmittlere Molmasse Mₙ (Gelchromatographie, Polystyrol-Standard) liegt in der Regel zwischen 600 und 12000 g/mol, vorzugsweise 2000 und 8000 g/mol. Vorzugsweise sind die Carboxylgruppen endständig an den Molekülketten angeordnet, die linear oder verzweigt sein können. Im allgemeinen bestehen die Endgruppen des Carboxylpolyesters zu über 70 %, vorzugsweise zu über 90 %, aus Carboxylgruppen, wobei die Kettenenden überwiegend durchschnittlich 2 und mehr Carboxylgruppen, teilweise als Carbonsäureanhydridgruppen vorliegend, aufweisen.

Die Schmelzeviskositäten des Carboxylpolyesters bei 200 °C liegen im allgemeinen zwischen 1000 und 8000, vorzugsweise zwischen 2000 und 6000 mPa.s.

Die Herstellung der Carboxylpolyester erfolgt in bekannter Weise in einem Einstufenverfahren oder bevorzugt in einem Zweistufenverfahren wie beispielsweise in der DE-OS 2 163 962 beschrieben, durch Reaktion von geeigneten Polyolen mit geeigneten Polycarbonsäuren oder deren Derivaten, insbesondere Anhydriden. Die Polycarbonsäuren und Anhydride werden dabei im Überschuß eingesetzt. In der Regel ist das Mengenverhältnis so, daß das Äquivalentverhältnis von Hydroxyl- zu Säure- bzw. Anhydridgruppen 1 zu 3 bis 1 zu 1,1, vorzugsweise 1 zu 2,2 bis 1 zu 1,8 beträgt.

Als Polyolkomponente kommen zweckmäßigerweise solche Verbindungen in Frage, die Hydroxylzahlen im Bereich 10 bis 80, vorzugsweise von 15 bis 40 mg KOH/g, besitzen und zahlenmittlere Molmassen Mₙ (Gelchromatographie) von 600 bis 10000, vorzugsweise von 2000 bis 8000 g/mol sowie Erweichungspunkte von 35 bis 110 °C, vorzugsweise von 40 bis 90 °C (Differentialthermoanalyse) aufweisen. Genannt seien hier beispielsweise OH-gruppenhaltige Polyester, Polyäther, Polythioäther, Polyacetale, Polycarbonate und Polyesteramide. Lineare oder verzweigte Polyester sind dabei bevorzugt.

Solche Hydroxylgruppen tragenden Polyester sind z. B. Umsetzungsprodukte von mehrwertigen, vorzugsweise zweiwertigen und gegebenenfalls zusätzlich dreiwertigen Alkoholen, mit mehrwertigen, vorzugsweise zweiwertigen Carbonsäuren. Anstelle der freien Polycarbonsäuren können auch die entsprechenden Polycarbonsäureanhydride oder Polycarbonsäureester von Alkoholen mit 1 bis 6 C-Atomen oder deren Gemische zur Herstellung der Polyester verwendet werden. Die Reaktion kann auch in Gegenwart von üblichen Veresterungskatalysatoren durchgeführt werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt: die gesättigten aliphatischen Dicarbonsäuren Bernsteinsäure, Adipinsäure, Korksäure, Azelainsäure, Sebacinsäure; weiter Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure, weiter Terephthalsäuredimethylester und Terephthalsäure-bis-glykolester.

Als mehrwertige Alkohole kommen zum Beispiel Äthylenglykol, 1,2- und 1,3-Propylenglykol, 1,4- und 2,3-Butylenglykol, 1,6-Hexandiol, 1,8-Octandiol, Neopentylglykol, 1,4-Bishydroxymethylcyclohexan, 2-Methyl-1,3-propandiol, Glycerin,Trimethylolpropan, 1,2,6-Hexantriol, 1,2,4-Butantriol, Trimethyloläthan, Pentaerythrit, Chinit, Mannit und Sorbit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Auch Polyester aus Lactonen, z. B. ε-Caprolacton, oder aus Hydroxycarbonsäuren, z. B. α-Hydroxycapronsäure, sind einsetzbar.

Beispiele für die Anhydride sind hier insbesondere Trimellithsäureanhydrid (TMSA) sowie Pyromellithsäureanhydrid oder Maleinsäureanhydrid-Addukte z. B. an Piperylen, zu nennen.

Weitere erfindungsgemäß geeignete, carboxylgruppenhaltige Polyester als Härtungsmittel B) sind beispielsweise in der DE-C 36 18 355 sowie in den DE-A 21 63 962 und 26 18 729 beschrieben, auf die hiermit Bezug genommen wird.

Besonders bevorzugt als Härter sind Carboxylgruppen-haltige Polyester, deren Säurezahl zwischen 15 und 150 mg KOH / g liegt, und deren zahlenmittlere Molmasse zwischen 600 und 12 000 g/mol liegt.

Bevorzugt als Härter sind auch Imidazoline der Formel (III) 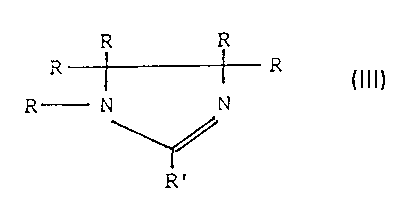
worin die Substituenten R jeweils unabhängig voneinander Wasserstoff oder ein Alkyl-, Aryl-, Aralkyl-, Cycloalkyl- oder heterocyclischen Rest, R' gleich R oder ein Alkylen- oder Arylen-Rest, der gegebenenfalls mit einem oder mehreren Alkyl-, Aryl-, Aralkyl-, Cycloalkyl- oder heterocyclischen Resten substituiert sein kann über den zwei Imidazol- oder Imidazolin-Reste verknüpft sind und wobei mehrere Reste, gegebenenfalls auch durch Heteroatome verbunden sein können und/oder Imidazole der Formel (IV) 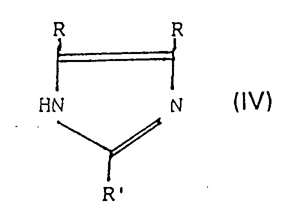
worin R und R' die gleiche Bedeutung haben wie in Formel (III).

Geeignete Imidazoline sind beispielsweise folgende Verbindungen: 2-Methylimidazolin, 2-Äthyl-4-methyl-imidazolin, 2-Phenylimidazolin, 2-Undecylimidazolin, 2-Heptadecylimidazolin, 2-Äthylimidazolin, 2-Isopropylimidazolin, 2,4-Dimethyl-imidazolin, 2-Phenyl-4-methyl-imidazolin, 2-Benzylimidazolin, 2-(o-Tolyl)-imidazolin, 2-(p-Tolyl)-imidazolin, Tetramethylen-bis-imidazolin, 1,1,3-Trimethyl-1,4-tetramethylen-bis-imidazolin, 1,3,3-Trimethyl-1,4-tetramethylen-bis-imidazolin, 1,1,3-Trimethyl-1,4-tetramethylen-bis-4-methylimidazolin, 1,2-Phenylen-bis-imidazolin, 1,3-Phenylen-bis-imidazolin, 1,4-Phenylen-bis-imidazolin, 1,4-Phenylen-bis-4-methylimidazolin. Es können auch beliebige Mischungen der Imidazoline eingesetzt werden.

Geeignete Imidazole sind z.B. Imidazol, 1-Methyl-imidazol, 2-Methyl-imidazol, 4-Methyl-imidazol, 5-Methylimidazol, 1-Äthyl-imidazol, 2-Äthyl-imidazol, 1-Propyl-imidazol, 2-Propyl-imidazol, 2-Isopropyl-imidazol, 1-Butyl-imidazol, 2-Octyl-imidazol, 2-Undecyl-imidazol, 2-Heptadecyl-imidazol, 2-Cyclohexyl-imidazol, 1-Phenyl-imidazol, 2-Phenylimidazol, 2,4-Dimethyl-imidazol, 1,2-Dimethyl-imidazol,4,5-Dimethyl-imidazol, 2-Äthyl-4-methyl-imidazol, 1-Äthyl-2-methyl-imidazol, 1-Methyl-2-isopropyl-imidazol, 4-Butyl-5-äthyl-imidazol, 2-Cyclohexyl-4-methyl-imidazol, 1-Benzyl-2-methylimidazol, 2-Phenyl-4-methylimidazol, 4,5-Diphenyl-imidazol, 2-Äthyl-4-phenylimidazol, 2,4,5-Trimethyl-imidazol, 2,4,5-Tricyclohexyl-imidazol, 1,2,4,5-Tetramethylimidazol sowie Benzimidazole und deren Derivate. Es können auch beliebige Mischungen der Imidazole eingesetzt werden.

Die Menge der Härtungsmittel in den erfindungsgemäßen pulverförmigen Mischungen hängt von der Art des Härtungsmittels ab und kann in weiten Grenzen schwanken. Im allgemeinen beträgt die Menge an Härtungsmittel 0,01 bis 90, vorzugsweise 0,5 bis 85 %, bezogen auf die Summe der Massen der beiden Komponenten A) und B). Im Fall von Imidazolen und Imidazolinen sind bis zu 70 %, bevorzugt bis zu 40 % ausreichend.

Die erfindungsgemäßen Mischungen können zusätzlich die bei Pulverlacken üblichen Zusatzstoffe enthalten, wie Verlaufmittel bzw. Antikratermittel, Farbstoffe, Pigmente, Füllstoffe, Mattierungsmittel, Thixotropiermittel, Entlüftungsmittel, UV-Stabilisatoren, Oxidationsinhibitoren, Quencher (Radikalfänger, wie zum Beispiel N-alkylsubstituierte Piperidine), Katalysatoren zur Beschleunigung der Vernetzungsreaktion, Weichmacher, zusätzliche Härter, zusätzliche härtbare Harze und dergleichen. Diese Zusatzstoffe werden im allgemeinen in Mengen von 0 bis 50, vorzugsweise 0,1 bis 40 %, bezogen auf die Gesamtmasse der Pulverlackmischung, eingesetzt. Eventuell flüssige oder pastöse Zusatzstoffe können dabei u. a. in Mischung mit hochaktiver Kieselsäure als Masterbatch (siehe DE-A 22 02 907) zur Anwendung kommen.

Als Verlaufmittel können zum Beispiel Acetale, wie Polyvinylformal, Polyvinylacetal, Polyvinylbutyral, Polyvinylacetobutyral u. a., Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente A) in Mengen von 0,1 bis 4 %, vorzugsweise 0,2 bis 2,0 % zugesetzt werden.

Als Farbstoffe bzw. Pigmente, die anorganischer oder organischer Natur sein können, seien beispielsweise Titandioxid und Zinkoxid genannt. Die organischen Farbstoffe oder Pigmente sind naturgemäß so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide und Gips.

Die Stabilisatoren können auch aromatische Diketone wie Benzoin sein, die punktuelle Zersetzungen unterbinden und damit die Porenbildung herabdrücken.

Diese werden im allgemeinen in Mengen von 0,1 bis 3, vorzugsweise von 0,2 bis 2 % zugegeben, bezogen auf die Masse des gesamten Bindemittelgemisches.

Zur Vorbereitung der erfindungsgemäßen pulverförmigen Mischungen für die Prüfung, Verarbeitung und den praktischen Einsatz werden im allgemeinen die einzelnen Komponenten miteinander vermischt. Bei der Verwendung von flüssigen Bestandteilen werden die festen Komponenten fein gemahlen und die flüssigen Komponenten in diese gleichmäßig verteilt. Zur Herstellung der erfindungsgemäßen, härtbaren Mischungen werden die Komponenten nach dem Mischen in der Schmelze homogenisiert. Dies kann in geeigneten Aggregaten erfolgen, zum Beispiel beheizbaren Knetern, Doppel-Z-Mischern, Extrudern, vorzugsweise durch letztere, wobei die Extrusionstemperatur so zu wählen ist, daß ein Maximum an Scherkraft auf die Mischung einwirkt. Dabei sollte eine Temperaturobergrenze von 130 °C nicht überschritten werden. Bei Einsatz von Katalysatoren kann es zweckmäßig sein, diese den Komponenten A) oder B) zuzusetzen. Dies kann beispielsweise auch bei der Herstellung der Komponente A) erfolgen.

Die homogenisierte Masse wird dann nach Abkühlen auf Raumtemperatur und nach einer geeigneten Vorzerkleinerung zu einer härtbaren, pulverförmigen Mischung (Pulverlack) gemahlen, wobei je nach dem Verwendungszweck mittlere Teilchengrößen von ca. 40 bis 90 µm, vorzugsweise jedoch ca. 50 µm, angestrebt werden. Ein eventuell vorhandener Grobkornanteil von Teilchengröße von mehr als 90 µm wird durch Absieben entfernt.

Aufgrund ihrer hohen Reaktivität sind die erfindungsgemäßen Mischungen insbesondere als Klebe- und Beschichtungsmittel geeignet.

Das Auftragen der so hergestellten Pulverlacke auf geeignete Substrate, wie zum Beispiel Metall, Holz, Glas, Beton, Kunststoff und Keramik, kann nach den bekannten Verfahren, zum Beispiel durch elektrostatisches Pulversprühen, Pulverapplikation mit dem Triboverfahren, Wirbelsintern, elektrostatisches Wirbelsintern sowie im Flammsprühverfahren erfolgen.

Nach dem Auftragen des Pulverlackes nach einem der genannten Verfahren werden die beschichteten Werkstücke zur Aushärtung auf eine Temperatur von 90 bis 270 °C, vorzugsweise 120 bis 220 °C erhitzt, für eine zum Aushärten ausreichende Zeit, im allgemeinen 0,5 bis 60 Minuten. Die so erhaltenen Beschichtungen zeichnen sich durch gute lacktechnische Eigenschaften, wie gute mechanische Eigenschaften, gute chemische Beständigkeit, gute Wetterbeständigkeit und gute Haftung aus. Die erfindungsgemäßen Pulverlacke eignen sich daher insbesondere zum Beschichten von Materialien, wie zum Beispiel Metall, Glas, Geweben, Papier und Keramik.

Darüber hinaus können die erfindungsgemäßen Mischungen auch als Klebstoff eingesetzt werden. Die Herstellung der Klebstofformulierungen erfolgt prinzipiell auf gleiche Weise wie bei den Pulverlackmischungen beschrieben. Das heißt, zunächst werden die Epoxid-Festharze (Komponente A) zerkleinert und danach mit dem Härter B innig miteinander vermischt, wobei für eine gleichmäßige Verteilung der Komponenten gesorgt wird.

Die so erhaltenen Formulierungen können gegebenenfalls mit üblichen, oben beschriebenen Zusätzen, wie Füllstoffen, Pigmenten und Farbstoffen versetzt werden. Die erfindungsgemäßen Mischungen können Verwendung finden zum Verkleben aller Arten von Werkstoffen, zum Beispiel Metallen, Leichtmetallen, aber auch nichtmetallischen Werkstoffen wie Keramik, Glas, Leder, Gummi, Papier, Kartonagen, Holz und Kunststoffen mit sich selbst oder mit anderen Werkstoffen. Auch können sie zur Herstellung von Sandwichkonstruktionen aus Metallen und anderen Werkstoffen herangezogen werden.

Besonders hervorzuheben ist die Möglichkeit, Sandwichsysteme aus Holz (Spanplatten, Sperrholz u. a.) und Geweben, zum Beispiel aus Polyesterfasern (®Trevira), aufzubauen. Das Gewebe wird bei dem Verklebungsprozeß komplett in das Bindemittelsystem eingebettet, bildet eine homogene Oberfläche und haftet optimal auf dem Untergrund. Der auf diese Weise erhaltene Verbundwerkstoff weist gegenüber blanken Span- oder Sperrholzplatten selbst bei geringeren Materialstärken eine hohe Durchbiegefestigkeit auf. Durch diese Arbeitsweise gelingt es, Platten mit geringerem Gewicht bei gleicher Qualität im Vergleich zu Standardmaterialien herzustellen.

Im Fall der Verwendung der erfindungsgemäßen Mischungen für Verklebungen, kann die Applikation auf elektrostatischem Wege, z. B. mit einer elektrostatischen Pulversprühpistole, erfolgen. Auf diese Weise ist es möglich, gleichmäßig dünne Schichten (zum Beispiel auf Folien) aufzutragen. Durch die schnelle Reaktion der Einzelkomponenten der erfindungsgemäßen Mischungen bei niedrigen Temperaturen, können auch hohe Fabrikationsdurchsatzraten erreicht werden.

Ein herausragender Vorteil ist dabei, daß Vergilbungen, Verbrennungen und das Ausgasen vermieden werden können. Die Aushärtung der pulverförmigen Mischung auf den beschichteten Materialien erfolgt im allgemeinen bei Temperaturen von 120 bis 220 °C, vorzugsweise von 130 bis 210 °C, in einer ausreichenden Zeit von 2 bis 60 Minuten.

Besonders geeignet sind die erfindungsgemäßen Zusammensetzungen zur Beschichtung von Filterpapieren, die bei der Herstellung von Filtern für niederund mittelviskose Flüssigkeiten wie zum Beispiel Öle, verwendet werden können. Dabei wird das Epoxidharz/Härter-Gemisch entweder in Form eines feinteiligen Pulvers auf unbehandeltes Filterpapier appliziert und kurz angeschmolzen, oder das Papier wird mit einer Schmelze des Gemisches beschichtet. Die Aushärtung erfolgt dann bei der endgültigen Konfektionierung und Verklebung.

### Beispiele:

### Epoxidharz I (Vergleich)

Handelsübliches Bisphenol-A-Epoxidharz für die Herstellung von Pulverlacken mit folgenden Kennzahlen:

| | |
|---|---|
| Epoxidäquivalentgewicht | ca. 800 g/mol |
| Viskosität bei 25 °C | ca. 500 mPa.s |
| 40%ig in Butyldiglykol n. DIN 53 015 Schmelzpunkt | ca. 70 °C |
| Kapillarmethode nach DIN 53 015 Glasübergangstemperatur | ca. 50 °C |

### Epoxidharz II (erfindungsgemäß)

### Herstellung

1464 g eines flüssigen Bisphenol-A-Epoxidharzes mit einem Epoxidäquivalentgewicht von 183 g/mol (8 mol Epoxygruppen) und 456 g Bisphenol-A (2 Mol) werden in einem Vierhalskolben unter Rühren und Stickstoffatmosphäre auf 125 °C erwärmt und mit 4 g Triäthanolamin versetzt. Durch exotherme Reaktion und zusätzliche Heizung wird die Temperatur innerhalb von 15 Minuten auf 160 °C gebracht und 4,5 Stunden gehalten. Das Epoxidäquivalentgewicht beträgt nun 468. Nach einer weiteren Stunde Haltezeit bei 160 °C wird auf 150 °C eingestellt und 91,4 g (0,6 Mol) Tetrahydrophthalsäureanhydrid zugegeben. Nach 1,25 Stunden liegt die Säurezahl bei 0,9 mg KOH/g. Nach weiteren 0,5 Stunden wird der Kolben entleert.

### Kenndaten:

| | |
|---|---|
| Epoxidäquivalentgewicht | 601 g/mol |
| Säurezahl (Toluol/Äthanol) | 0,2 mg KOH/g |
| Viskosität 25 °C (40 % in Butyldiglykol) | 519 mPa.s |
| Glasübergangstemperatur | 45,7 °C |

### Beispiel 1

### Gelzeitbestimmung

Die Gelzeit wurde nach DIN 16 916 Teil 2 (September 1987) Abschnitt 5.7.1. "Bestimmung der B-Zeit" bei 180 °C gemessen. Die Ergebnisse verschiedener erfindungsgemäßer Mischungen im Vergleich zu solchen nach dem Stand der Technik sind in Tabelle 1 zusammengefaßt.

Die erfindungsgemäßen pulverförmigen Mischungen zeigen überraschend kurze Gelzeiten gegenüber den Mischungen mit einem Epoxidharz nach dem Stand der Technik. Dies ist ein Maß für die hohe Reaktivität der erfindungsgemäßen verwendeten Mischungen und demonstriert den großen Einfluß der Epoxidharz-Komponente A auf die Reaktionsgeschwindigkeit des Gesamtsystems.

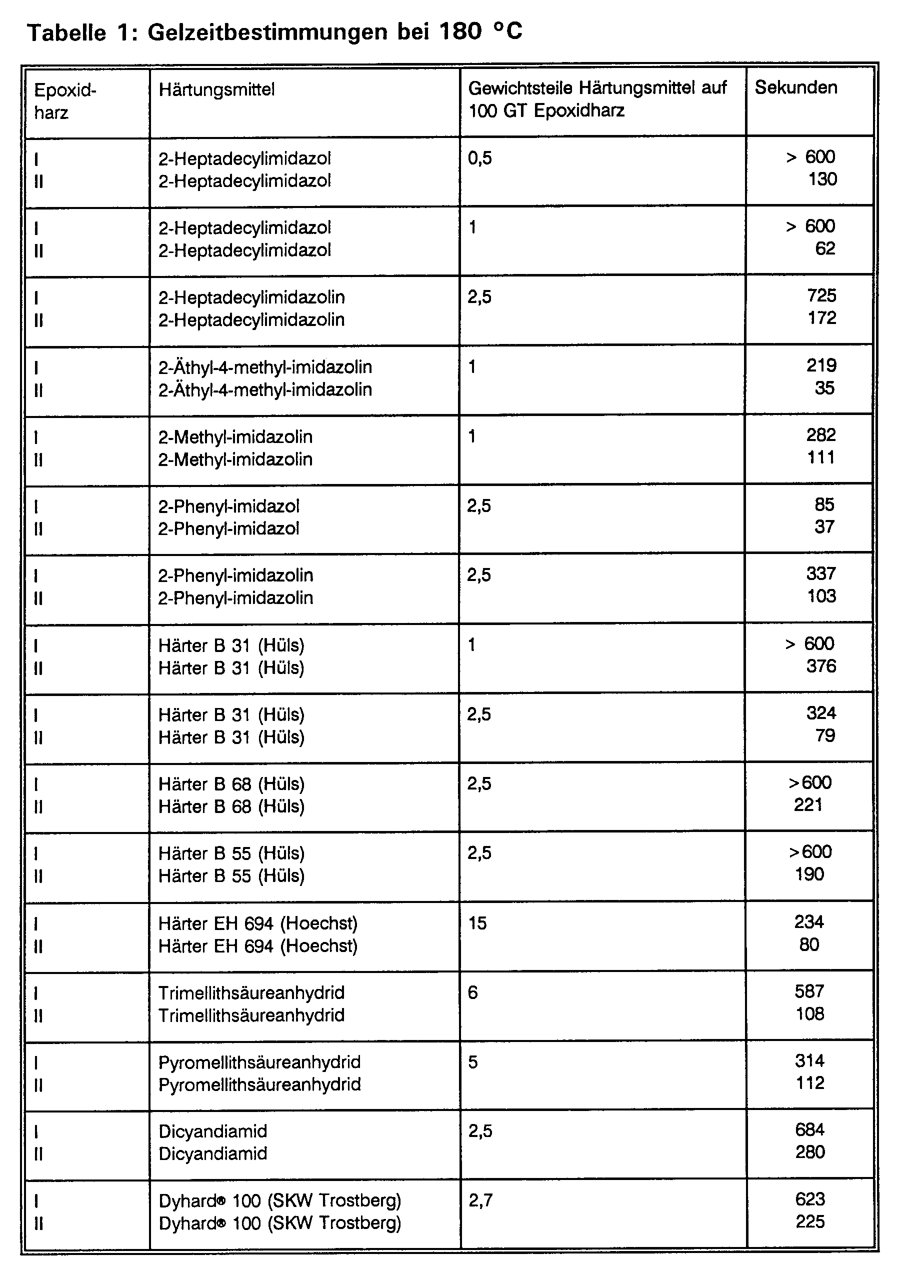

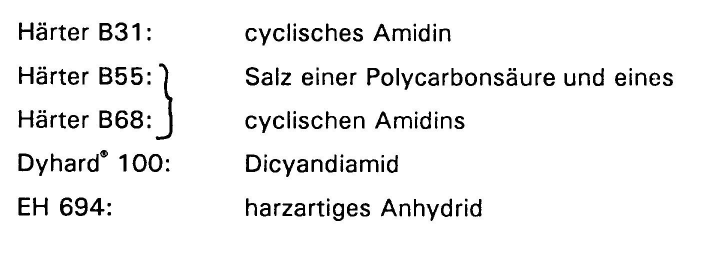

### Beispiel 2

### Lacktechnische Prüfung

Die in Tabelle 3 geprüften Pulverlacke wurden durch Extrudieren der Pulverlackmischungen aus Carboxylpolyester, Epoxidharz, Pigment und Zusatzstoffen in dem in Tabelle 2 angeführten Mischungsverhältnis hergestellt und sind hinsichtlich des Herstellungsverfahrens und der Teilchengrößenverteilung (mittlere Teilchengröße 50 µm) untereinander vergleichbar. Die extrudierten Pulverlackmischungen wurden mit einer Corona-Sprühpistole auf entfettete Stahlbleche aufgebracht. Die Schichtstärke betrug durchschnittlich ca. 63 µm und die Einbrenntemperatur 160 °C (siehe Tabelle 3). Die Prüfungen wurden nach den angegebenen Normen durchgeführt.

Die Vergilbungsneigung wurde in der Weise ermittelt, daß die lackierten Bleche mit den eingebrannten Filmen geteilt und eine Hälfte bei 200 °C überbrannt wurde. Die ΔE-Farbdifferenzmessung erfolgte an einem Farbmeßgerät Tricolor LFM 3 der Firma Lange nach DIN 6174, CIE-LAB 1976 gegen einen Weißstandard bzw. an den überbrannten Lackfilmen gegen den nicht überbrannten Filmteil.

**Tabelle 2**

| **Pulverlackmischungen (Zusammensetzung in Gewichtsteilen)** | | |
|---|---|---|
| | Beispiel 2 a) Vergleich | Beispiel 2 b) |
| Epoxidharz I | 170 | - |
| Epoxidharz II | - | 157 |
| Polyester¹⁾ | 397 | 410 |
| Titandioxid²⁾ | 300 | 300 |
| Blanc fixe F | 100 | 100 |
| Verlaufmittel³⁾ | 30 | 30 |
| Benzoin | 3 | 3 |

| | | |
|---|---|---|
| 1) Carboxylpolyester ® Alftalat AN 770 (Hoechst) mit folgenden Kenndaten: Säurezahl DIN 53 402 34 ± 4 mg KOH/g Glasübergangstemperatur 53 ± 2 °C (gem. mit DSC Mettler TA 3000 bei 10 °C/min) Viskosität 200 °C (gem. mit ICI Cone & Plate) 5000 bis 6500 mPa.s | | |
| 2) ®Kronos 2160 der Firma Kronos Titan | | |
| 3) ®Additol XL 396 (Hoechst) | | |

### Beispiel 3

### Verklebung von Polyester-Gewebe

Das Harz/Härter-Gemisch (z. B. 92 Gewichtsteile des Epoxidharzes II und 8 Gewichtsteile Härter B 31, cyclisches Amidin der Hüls Aktiengesellschaft) wird in einem MTI-Mischer auf < 5 mm Korngröße gemischt und bei 80 °C mit einer Verweilzeit von 10 - 15 Sekunden extrudiert und das schmelzflüssige Bindemittel-Härter-Gemisch direkt nach der Dispergierung im Extruder zusammen mit dem Polyester-Gewebe durch einen Kalander geführt, wobei sich das schmelzflüssige Material gleichmäßig auf dem Gewebe verteilt. Das beschichtet Gewebe wird bis zu seiner weiteren Verwendung bzw. Verklebung bei Umgebungstemperatur zwischengelagert.

Das mit der Pulvermischung ausgerüstete Gewebe wird gestanzt, geschnitten und anschließend unter Druck (40 bar) in 40 Sekunden bei 200 °C mit Spanplatten verklebt. Durch die gewählten Verfahrensbedingungen schmilzt das Pulvergemisch auf, benetzt das Substrat (Spanplatte und Gewebe) sehr gut und härtet danach aus. Dabei wird das Polyester-Gewebe komplett in das Bindemittelsystem eingebettet, bildet eine homogene Oberfläche und haftet optimal auf dem Untergrund.

**Tabelle 3**

| **Prüfergebnisse der Lackfilme** | | | | |
|---|---|---|---|---|
| | Beispiel 2c (Vergleich) | Beispiel 2d (Vergleich) | Beispiel 2e | Beispiel 2f |
| Pulverlackmischung Beispiel | 2 a | 2 a | 2 b | 2 b |
| Trockungstemperatur (°C) | 160 | Überbrennen 200 | 160 | Überbrennen 200 |
| Trockungszeit (min) | 10 | 60 | 10 | 60 |
| Schichtdicke (µm) | 60 - 66 | 56 - 62 | 60 - 66 | 66 - 70 |
| Glanz 60°-Optik DIN 67 530 (%) | 95 | 94 | 95 | 94 |
| Verlauf (+) | 2 | | 2 | |
| Krater (+) | 0 | | 0 | |
| Erichsentiefung DIN 53 156 (mm) | 11,2 | 11,8 | 11,5 | 11,7 |

| Schlagprüfung ASTM D 2794 | | | | |
|---|---|---|---|---|
| direkt Nm (lb·in) | 1,8 (16) | 18,1 (160) | 6,8 (60) | 18,1 (160) |
| indirekt Nm (lb·in) | <0,5 (<4) | 18,1 (160) | 4,5 (40) | 18,1 (160) |
| Butylacetattest 3 min (+) | 5 | 4 | 4 | 3 |
| Xyloltest 30 min (+) | 5 | 5 | 5 | 4 |
| ΔE z. Pulver-Weißstandard | 1,21 | | 1,35 | |
| ΔB z. Pulver-Weißstandard | 0,12 | | 0,04 | |
| ΔE z. Normal-Härtung | | 3,15 | | 1,94 |
| ΔB z. Normal-Härtung | | 2,79 | | 1,93 |
| Blockbeständigkeit der Pulverlackmischung 40°C n. DIN 55990 7 Tage | 2 | | 2 | |
| Gelzeit der Pulverlackmischung bei 180 °C (s) | 197 | | 85 | |

| | | | | |
|---|---|---|---|---|
| (+) = Prüfung visuelle Benotung nach DIN 53 230 0 = sehr gut, 5 = sehr schlecht | | | | |

Aus den Beispielen in Tabelle 3 ist zu entnehmen, daß die Pulverlackfilme aus der erfindungsgemäßen gegenüber der Vergleichs-Pulverlackmischung gleichwertige (Glanz, Verlauf, Krater, Erichsentiefung) und teilweise bessere (Lösungsmitteltest, Gilbungsbeständigkeit) Prüfergebnisse liefern. Insbesondere zeigt die erfindungsgemäße Pulverlackmischung 2 b (2 e) eine wesentlich höhere Reaktivität (niedrigere Gelzeit) als die nach dem Stand der Technik 2 a (2 c). Darüber hinaus wurde gefunden, daß auch die Schlagprüfungswerte des erfindungsgemäßen Lackfilms (2 e) bei der gewählten Einbrenntemperatur höher liegen als die des Vergleichs (2 c). In der Praxis kann man deshalb mit den erfindungsgemäßen Harzen Pulverlackfilme vorteilhaft bei niedrigeren Temperaturen einbrennen als die nach dem Stand der Technik.

### Beispiel 4

### Verklebung von Polyester-Gewebe

Das Harz/Härter-Gemisch (z. B. 92 Gewichtsteile des Epoxidharzes II und 8 Gewichtsteile des Härters B 31, cyclisches Amidin der Hüls Aktiengesellschaft) wird in einem MTI-Mischer auf < 5 mm Korngröße gemischt und bei 80 °C mit einer Verweilzeit von 10 - 15 Sekunden extrudiert. Das mit 100 °C austretende Extrudat wird abgekühlt, gebrochen, gemahlen und auf eine Korngröße < 125 µm gesiebt.

Die auf diese Weise erhaltene Pulvermischung wird mittels einer elektrostatischen Pulversprühpistole auf Polyester-Gewebe appliziert und das beschichtete Material weiterverarbeitet, indem entweder
a) das mit dem Pulvergemisch versehene Polyester-Gewebe sofort auf zu kaschierende Spanplatten verpreßt und verklebt oder
b) das Pulvergemisch 2 Minuten bei 100 °C an das Trevira-Gewebe angeschmolzen, zwischengelagert und danach mit Spanplatten verklebt wird.

Die Verklebung der auf diese Weise ausgerüsteten Gewebe erfolgt unter Druck (40 bar) in 40 Sekunden bei 200 °C auf Spanplatten. Durch die gewählten Verfahrensbedingungen schmilzt das Pulvergemisch auf, benetzt das Substrat (Spanplatte und Gewebe) sehr gut und härtet danach aus.

### Beispiel 5

### Filterpapierbeschichtung

Das Epoxidharz/Härter-Gemisch (z. B. 92 Gewichtsteile des Epoxidharzes II und 8 Gewichtsteile Härter B 31, cyclisches Amidin der Hüls Aktiengesellschaft) wird in einem MTI-Mischer auf < 5 mm Korngröße gemischt und bei 80 °C mit einer Verweilzeit von 10 - 15 Sekunden extrudiert. Das mit 100 °C austretende Extrudat wird abgekühlt, gebrochen, gemahlen und auf eine Korngröße < 125 µm gesiebt.

Die auf diese Weise erhaltene Pulvermischung wird mittels einer elektrostatischen Pulversprühpistole auf Filterpapier appliziert, bei ca. 100 °C für 2 Minuten an das Papier angeschmolzen und bis zur Verklebung zwischengelagert.

Es kann auch so verfahren werden, daß das mit dem noch nicht angeschmolzenen Pulverlack versehene Filterpapier auf die gewünschte Form zurechtgeschnitten, gestanzt und anschließend sofort verklebt wird.

Anstatt des elektrostatischen Auftrags kann auch das schmelzflüssige Bindemittel-Härter-Gemisch nach dessen Dispergierung im Extruder direkt auf das Papier aufgetragen werden. Dazu wird das flüssige Material zusammen mit dem Filterpapier durch einen Kalander geführt, wobei sich eine gleichmäßige Schicht auf dem Papier ausbildet. Anschließend wird das beschichtete Filterpapier bis zur Verklebung zwischengelagert.

Die mit Pulverlack ausgerüsteten Papiere werden zurechtgestanzt, geschnitten und anschließend unter Druck und Temperatur miteinander verklebt. Durch die gewählten Verfahrensbedingunen schmilzt das Pulver auf, benetzt die zu verklebenden Papiere in ausreichender Form und härtet in sehr kurzer Zeit (z. B. wenige Sekunden bei 180 °C) zu für die Ölfilterherstellung geeigneten Verklebungen aus.

## Patentansprüche

1. Härtbare, pulverförmige Mischungen enthaltend
A) Verbindungen, die mindestens zwei 1,2-Epoxidgruppen enthalten, die Umsetzungsprodukte sind aus
A1) Verbindungen mit mindestens zwei 1,2-Epoxidgruppen pro Molekül und
A2) cyclischen Carbonsäureanhydriden,
B) Härtungsmittel und
C) gegebenenfalls weitere Zusätze.

2. Härtbare Mischungen nach Anspruch 1, dadurch gekennzeichnet, daß die Verbindungen A1) Epoxidäquivalentgewichte zwischen 160 und 1000 g/mol haben.

3. Härtbare Mischungen nach Anspruch 1, dadurch gekennzeichnet, daß Verbindungen A1) ausgewählt sind aus der Gruppe der Diglycidyläther von Bisphenol-A und Bisphenol F.

4. Härtbare Mischungen nach Anspruch 1, dadurch gekennzeichnet, daß als cyclische Anhydride A2) solche aus der Gruppe Bernsteinsäureanhydrid, Phthalsäureanhydrid, Δ⁴-Tetrahydrophthalsäureanhydrid und Hexahydrophthalsäureanhydrid eingesetzt werden.

5. Härtbare Mischungen nach Anspruch 1, dadurch gekennzeichnet, daß die Verbindungen A) Epoxidäquivalentgewichte von 300 bis 1500 g/mol aufweisen.

6. Härtbare Mischungen nach Anspruch 1, dadurch gekennzeichnet, daß die Glasübergangstemperatur der Verbindungen A) mindestens 20 °C beträgt.

7. Härtbare Mischungen nach Anspruch 1, dadurch gekennzeichnet, daß die Verbindungen A) Säurezahlen von 0,01 bis 20 mg KOH / g aufweisen.

8. Härtbare Mischungen nach Anspruch 1, dadurch gekennzeichnet, daß die Verbindungen A) zahlenmittlere Molmassen von 500 bis 10 000 g/mol aufweisen.

9. Härtbare Mischungen nach Anspruch 1, dadurch gekennzeichnet, daß zur Synthese der Komponente A pro 1 mol Epoxidverbindung A1) 0,01 bis 1 mol cyclisches Carbonsäureanhydrid, eingesetzt wird.

10. Härtbare Mischungen nach Anspruch 1, dadurch gekennzeichnet, daß zur Synthese der Komponente A pro 1 mol Epoxidverbindung A1) 0,05 bis 0,5 mol cyclisches Carbonsäureanhydrid, eingesetzt wird.

11. Härtbare Mischungen nach Anspruch 1, dadurch gekennzeichnet, daß die Härtungsmittel B) Carboxylgruppen-haltige Polyester sind.

12. Härtbare Mischungen nach Anspruch 11, dadurch gekennzeichnet, daß die Säurezahl der Carboxylgruppen-haltigen Polyester 15 bis 150 mg KOH/g beträgt.

13. Härtbare Mischungen nach Anspruch 11, dadurch gekennzeichnet, daß die zahlenmittlere Molmasse Mₙ der Carboxylgruppen-haltigen Polyester zwischen 600 und 12000 g/mol liegt.

14. Härtbare, pulverförmige Mischungen nach Anspruch 1, dadurch gekennzeichnet, daß die Härtungsmittel B) Imidazoline der Formeln III oder Imidazole der Formel IV sind, 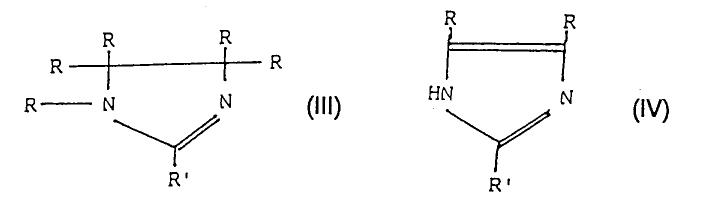 worin die Reste R unabhängig voneinander jeweils Wasserstoff oder einen Alkyl-, Aryl-, Aralkyl-, Cycloalkyl- oder heterocyclischen Rest bedeuten können, R' gleich R oder ein Alkylen- oder Arylen-Rest, der gegebenenfalls mit einem oder mehreren Alkyl-, Aryl-, Aralkyl-, Cycloalkyl- oder heterocyclischen Resten substituiert ist, und wobei mehrere Reste, gegebenenfalls auch durch Heteroatome, verbunden sein können.

15. Härtbare Mischungen nach Anspruch 14, dadurch gekennzeichnet, daß als Härtungsmittel B) 2-Phenylimidazolin eingesetzt wird.

16. Härtbare Mischungen nach Anspruch 1, dadurch gekennzeichnet, daß als Härtungsmittel Dicyandiamid eingesetzt wird.

17. Härtbare Mischungen nach Anspruch 1, dadurch gekennzeichnet, daß die Menge an Härtungsmittel B) 0,01 bis 90 % beträgt, bezogen auf die Summe der Massen von A) und B).

18. Substrat, beschichtet mit einem Überzug, der durch Aushärten einer Mischung nach Anspruch 1 erhalten wird.

19. Verwendung der härtbaren Mischungen nach Anspruch 1 als Klebstoff.

20. Verwendung der härtbaren Mischungen nach Anspruch 1 zum Beschichten von Filterpapier, insbesondere zur Herstellung von Ölfiltern.
